# EUROPEAN PATENT APPLICATION

(11) **EP 4 693 557 A1**
(43) Date of publication of application: **11.02.2026**
(21) Application number: 23931474.3
(22) Date of filing: 07.04.2023
(51) Int. Cl.: H01M 10/054, H01M 10/052, H01M 4/525

(54) **SODIUM ION BATTERY, BATTERY AND ELECTRICAL APPARATUS**

(71) Applicant: Contemporary Amperex Technology Co., Limited, Ningde, Fujian 352100 (CN)
(72) Inventor: JIN, Haizu, Ningde, Fujian 352100 (CN); XU, Xiaofu, Ningde, Fujian 352100 (CN); YE, Yonghuang, Ningde, Fujian 352100 (CN)
(74) Representative: Gong, Jinping
(86) International application number: PCT/CN2023/086836
(87) International publication number: WO 2024/207407

(57) **Abstract**

The present application provides a sodium-ion battery, a battery, and an electric apparatus. The sodium-ion battery includes a negative electrode plate and a positive electrode plate containing a positive electrode active material. The negative electrode plate includes a negative electrode current collector and a sodium metal layer disposed on at least one surface of the negative electrode current collector. A slope of a state of charge SOC-open circuit voltage OCV curve of the sodium-ion battery is denoted as k, and the state of charge SOC-open circuit voltage OCV curve of the sodium-ion battery satisfies: accumulated SOC ≥ 20%, and k ≥ 5 mV/1% SOC.

## Description

### TECHNICAL FIELD

The present application relates to a sodium-ion battery, a battery, and an electric apparatus.

### BACKGROUND

Sodium-ion batteries have characteristics such as high capacity and long lifespan, and thus are widely used in electronic devices, such as mobile phones, notebook computers, electric bicycles, electric vehicles, electric airplanes, electric ships, electric toy cars, electric toy ships, electric toy airplanes, and electric tools.

As the application range of batteries becomes increasingly broad, the performance requirements for sodium-ion batteries are gradually becoming more stringent. Due to the minimal voltage variation at the negative electrode of sodium-ion batteries, it is unfavorable for the correction of the state of charge, which in turn undermines the control of a battery management system.

### SUMMARY

The present application is made in view of the above issues, and is intended to provide a sodium-ion battery, a battery, and an electric apparatus.

According to a first aspect, the present application provides a sodium-ion battery. The sodium-ion battery includes a negative electrode plate and a positive electrode plate containing a positive electrode active material. The negative electrode plate includes a negative electrode current collector and a sodium metal layer disposed on at least one surface of the negative electrode current collector. A slope of a state of charge SOC-open circuit voltage OCV curve of the sodium-ion battery is denoted as k, and the state of charge SOC-open circuit voltage OCV curve of the sodium-ion battery satisfies: accumulated SOC ≥ 20%, and k ≥ 5 mV/1% SOC.

Thus, when the sodium-ion battery of an embodiment of the present application satisfies the above range, within 0 to 100% SOC, the battery has a significant plateau change over at least a cumulative 20% SOC range, that is, the SOC-OCV curve exhibits a significant slope change, with k ≥ 5 mV/1% SOC, thereby facilitating the control of a battery management system BMS.

In some embodiments, the state of charge SOC-open circuit voltage OCV curve of the sodium-ion battery satisfies: 90% ≤ SOC ≤ 100%, and k ≥ 5 mV/1% SOC.

In some embodiments, the state of charge SOC-open circuit voltage OCV curve of the sodium-ion battery satisfies: 25% ≤ SOC ≤ 50%, and k ≥ 5 mV/1% SOC.

In some embodiments, the positive electrode plate includes a positive electrode active material, and the positive electrode active material includes at least one of a layered oxide and a sodium-containing polyanionic compound, and modified compounds thereof. By using a combination of the above two types of materials, the embodiments of the present application can adjust the state of charge SOC-open circuit voltage OCV curve of the sodium-ion battery, facilitating more precise control of the battery management system BMS.

In some embodiments, the layered oxide includes one or more of a compound with a molecular formula of NaₓM_{y}O₂, and modified compounds thereof, where 0 < x ≤ 4.5, 0 < y ≤ 1, and M is selected from one or more of Ti, V, Cr, Fe, Co, Mn, Ni, Cu, Zn, Sr, Y, Zr, Nb, Mo, Cd, Sn, Sb, Te, Ba, Ta, W, Yb, La, and Ce; and further optionally, M is selected from one or more of Ti, V, Cr, Fe, Co, Mn, Ni, Cu, and Zn.

In some embodiments, the layered oxide includes one or more of NaFeO₂, NaTiO₂, NaMnO₂, Na₂NiO₂, Na_{2/3}[Ni_{1/3}Mn_{2/3}]O₂, Na_{2/3}[Cu_{1/3}Mn_{2/3}]O₂, Na_{2/3}[Fe_{1/2}Mn_{1/2}]O₂, Na_{2/3}[Co_{2/3}Mn_{1/3}]O₂, and Na_{7/9}[Cu_{2/9}Fe_{1/9}Mn_{2/3}]O₂.

In some embodiments, anions of the polyanionic compound include one or more of PO₄³⁻, P₂O₇⁴⁻, (PO₄)₂P₂O₇¹⁰⁻, (SO₄)₂⁴⁻, and (SO₄)₃⁶⁻; and further optionally, the anions of the polyanionic compound further include F⁻.

In some embodiments, the polyanionic compound includes cations of one or more elements from the group: Ni, V, Co, Fe, Mn, Ti, Cr, Zn, and Cu.

In some embodiments, the polyanionic compound includes one or more of NaCoPO₄, NaMnPO₄, Na₃V₂(PO₄)₃, NaCoPO₄F, Na₂CoP₂O₇, Na₂FeP₂O₇, Na₂MnP₂O₇, Na₄Co₃(PO₄)₂P₂O₇, Na₄Fe₃(PO₄)₂P₂O₇, Na₄Mn₃(PO₄)₂P₂O₇, Na₂Fe(SO₄)₂, and Na₂Fe₂(SO₄)₃.

In some embodiments, based on a total molar amount of anions of the polyanionic compound, a molar percentage of PO₄³⁻ is denoted as Aₘₒₗ%, and a molar percentage of P₂O₇⁴⁻ is denoted as Bₘₒₗ%; the polyanionic compound satisfies: 0.1 ≤ A/B ≤ 5.0; and optionally, 0.1 ≤ A/B ≤ 3.0.

In some embodiments, based on a total mass of the layered oxide and the polyanionic compound, a mass percentage of the layered oxide is denoted as Cwt%, where 0 < C ≤ 70.

According to a second aspect, the present application provides a battery including the sodium-ion battery according to any embodiment of the first aspect of the present application.

According to a third aspect, the present application provides an electric apparatus including the battery according to the second aspect of the present application.

### BRIEF DESCRIPTION OF DRAWINGS

To describe the technical solutions in the embodiments of the present application more clearly, the following briefly describes the accompanying drawings required for describing the embodiments of the present application. Apparently, the accompanying drawings in the following descriptions show merely some embodiments of the present application, and persons of ordinary skill in the art may still derive other drawings from the accompanying drawings without creative efforts.
FIG. 1 is a schematic diagram of an embodiment of a secondary battery of the present application.
FIG. 2 is a schematic exploded view of the embodiment of the secondary battery shown in FIG. 1.
FIG. 3 is a schematic diagram of an embodiment of a battery module of the present application.
FIG. 4 is a schematic diagram of an embodiment of a battery pack of the present application.
FIG. 5 is a schematic exploded view of the embodiment of the battery pack shown in FIG. 4.
FIG. 6 is a schematic diagram of an embodiment of an electric apparatus including a secondary battery of the present application as a power source.
FIG. 7 is an open circuit voltage OCV-state of charge SOC curve of sodium-ion batteries in Comparative Example 1 and Example 1.

The figures are not necessarily drawn to scale.

Reference signs are as follows:
1. battery pack; 2. upper box body; 3. lower box body; 4. battery module;
5. secondary battery; 51. housing; 52. electrode assembly;
53. cover plate; and
6. electric apparatus.

### DESCRIPTION OF EMBODIMENTS

Hereinafter, the embodiments that specifically disclose a sodium-ion battery, a battery, and an electric apparatus of the present application are described in detail. However, there may be cases in which unnecessary detailed descriptions are omitted. For example, detailed description of a well-known matter or repeated description of an actually identical structure has been omitted. This is to avoid unnecessarily prolonging the following descriptions, for ease of understanding by persons skilled in the art. In addition, the accompanying drawings and the following descriptions are provided for persons skilled in the art to fully understand the present application and are not intended to limit the subject described in the claims.

"Ranges" disclosed in the present application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it should be understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In the present application, unless otherwise specified, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer of 2, 3, 4, 5, 6, 7, 8, 9, 10, 11, or 12.

Unless otherwise stated, all the embodiments and optional embodiments of the present application can be combined with each other to form new technical solutions. Unless otherwise stated, all the technical features and optional technical features of the present application can be combined with each other to form new technical solutions.

Unless otherwise stated, all the steps in the present application can be performed in the order described or in random order, preferably, in the order described. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise stated, "include" and "contain" mentioned in the present application are inclusive or may be exclusive. For example, the terms "include" and "contain" can mean that other unlisted components may also be included or contained, or only listed components are included or contained.

Unless otherwise stated, in the present application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the present application, the term "multiple" means two or more than two and the term " multiple types" means two or more than two types.

To characterize the battery state, a state of charge (state of charge, SOC for short) of a battery is generally tested to reflect the capacity of the battery. When the battery is not being charged, the capacity of the battery can be considered as A₀, corresponding to 0% SOC. When the battery is fully charged, the battery can be considered to reach its rated capacity A, corresponding to 100% SOC. During the charging process, when the capacity of the battery is x% of (A-A₀), it corresponds to x% SOC, where x% is any value from 0 to 100, for example, x is 70, at which point the battery is charged to a capacity of 70% of (A-A₀), corresponding to 70% SOC.

In the related art, the open circuit voltage method is commonly used to correct the state of charge of the battery. A detection unit tests an open circuit voltage (Open Circuit Voltage, OCV for short) of the battery, and the detection unit transmits the open circuit voltage OCV to a battery management system BMS. The battery management system BMS obtains the state of charge of the battery based on a SOC-OCV curve of the battery. Based on this state of charge and the previously obtained state of charge, a first state of charge variation of the battery is obtained. Simultaneously, the battery management system BMS obtains the current in a battery circuit and calculates a second state of charge variation of the battery through ampere-hour integration. Finally, the first state of charge variation obtained by the open circuit voltage method is used to correct the second state of charge variation obtained by ampere-hour integration to obtain the state of charge of the battery.

However, in related technologies, a negative electrode plate of a sodium-ion battery includes a negative electrode current collector and a sodium metal layer, and during the charging-discharging process, the sodium metal layer exhibits minimal voltage variation. Additionally, since a positive electrode plate of the sodium-ion battery may exhibit a full plateau characteristic, it is difficult to determine the SOC state of a negative electrode and the SOC state of the entire battery through the SOC-OCV curve. Thus, this makes closed-loop correction impossible and does not facilitate the control of the battery management system BMS.

In view of the foregoing problems, the inventor has improved a positive electrode active material to make the SOC-OCV curve exhibit a certain slope change, thereby facilitating the control of the battery management system BMS.

### Sodium-ion battery

According to a first aspect, the present application provides a sodium-ion battery. The sodium-ion battery includes a negative electrode plate and a positive electrode plate containing a positive electrode active material. The negative electrode plate includes a negative electrode current collector and a sodium metal layer disposed on at least one surface of the negative electrode current collector. A slope of a state of charge SOC-open circuit voltage OCV curve of the sodium-ion battery is denoted as k, and the state of charge SOC-open circuit voltage OCV curve of the sodium-ion battery satisfies: accumulated SOC ≥ 20%, and k ≥ 5 mV/1% SOC.

The sodium metal layer of the negative electrode plate may be a sodium metal sheet disposed on the negative electrode current collector, and the sodium metal sheet may be disposed on one surface or two surfaces of the negative electrode current collector. Alternatively, the sodium metal layer may be sodium metal deposited on the negative electrode current collector during the charging process.

The positive electrode active material in the positive electrode plate has a slope change characteristic. When the positive electrode active material is used in combination with the negative electrode plate, it exhibits OCV variation characteristics during the charging process.

When the sodium-ion battery of an embodiment of the present application satisfies the above range, within 0 to 100% SOC, the battery has a significant plateau change over at least a cumulative 20% SOC range, that is, the SOC-OCV curve exhibits a significant slope change, with k ≥ 5 mV/1% SOC, thereby facilitating the control of a battery management system BMS.

The following is an embodiment of a method for testing the state of charge SOC-open circuit voltage OCV curve of the present application, including the following steps:
S101: The sodium-ion battery is charged with a nominal current using constant current and constant voltage until a nominal upper cut-off voltage of the sodium-ion battery is reached, such that the sodium-ion battery is fully charged.
S102: The fully charged sodium-ion battery is left standing for 2 h to allow an electrolyte in the sodium-ion battery to fully infiltrate a separator and an active material, such that the voltage of the sodium-ion battery is stabilized.
S103: The battery is discharged at a discharge rate of 0.33C to a lower cut-off voltage of the sodium-ion battery, and an actual discharged capacity C₀ of the sodium-ion battery is obtained through testing, where the actual discharged capacity C₀ is an actual capacity of the sodium-ion battery.
S104: The sodium-ion battery after being discharged is left standing for 2 h to allow the electrolyte in the sodium-ion battery to fully infiltrate the separator and the active material, such that the voltage of the sodium-ion battery is stabilized.
S105: The sodium-ion battery is charged with a constant current of 0.04C₀ to obtain a capacity C₁.
S106: C₁ is used as the denominator, and a capacity-open circuit voltage curve is converted into a state of charge SOC-open circuit voltage OCV curve.

Additionally, the nominal current can be freely selected based on the capacity of the battery. For example, when the capacity of the battery is 50 Ah, the nominal current can be 50 A. For another example, when the capacity of the battery is 100 Ah, the nominal current can be 100 A.

In the embodiments of the present application, the accumulated SOC refers to an interval difference on a horizontal axis. For example, if the SOC interval on the horizontal axis includes (10% to 50%), the accumulated SOC is 50% - 10% = 40%, that is, the accumulated SOC is 40%. For another example, if the SOC interval on the horizontal axis includes (10% to 50%) and (70% to 80%), the accumulated SOC is (50% - 10%) + (80% - 70%) = 50%, that is, the accumulated SOC is 50%. The accumulated SOC is 50%.

The slope k represents the degree of inclination of the tangent of the curve with respect to the horizontal axis, which can be expressed as the ratio of the difference in the vertical coordinates to the difference in the horizontal coordinates. For example, k being 5 mV/1% SOC indicates that the interval difference in the horizontal axis is 1% SOC, and the interval difference in a vertical axis is 5 mV.

Accumulated SOC of 40% and k ≥ 5 mV/1% SOC indicate that within a 40% SOC interval difference, the slope k of the curve is greater than or equal to 5 mV/1% SOC.

Exemplarily, accumulated SOC ≥ 20%, and k ≥ 5 mV/1% SOC; or accumulated SOC ≥ 35%, and k ≥ 5 mV/1% SOC; or accumulated SOC ≥ 40%, and k ≥ 5 mV/1% SOC; or accumulated SOC ≥ 45%, and k ≥ 5 mV/1% SOC.

In some embodiments, the SOC-OCV curve of the sodium-ion battery satisfies: 90% ≤ SOC ≤ 100%, and k ≥ 5 mV/1% SOC, where 90% ≤ SOC ≤ 100% indicates that within the SOC interval on the horizontal axis of 90% to 100%, the slope of the curve is greater than or equal to 5 mV/1% SOC. When the SOC-OCV curve of the sodium-ion battery satisfies the above range, it can, to some extent, reduce the risk of overcharging the sodium-ion battery and is more conducive to controlling full charge.

In some embodiments, the SOC-OCV curve of the sodium-ion battery satisfies: 25% ≤ SOC ≤ 50%, and k ≥ 5 mV/1% SOC, where 25% ≤ SOC ≤ 50% indicates that within the SOC interval on the horizontal axis of 25% to 50%, the slope of the curve is greater than or equal to 5 mV/1% SOC. When the SOC-OCV curve of the sodium-ion battery satisfies the above range, it facilitates the checkpoint detection and correction of SOC and SOH.

### [Positive electrode plate]

The positive electrode plate includes a positive electrode current collector and a positive electrode film layer disposed on at least one surface of the positive electrode current collector, where the positive electrode film layer includes a positive electrode active material.

The positive electrode film layer may be disposed on one surface of the positive electrode current collector or on two surfaces of the positive electrode current collector.

When the positive electrode active material of the sodium-ion battery of the embodiments of the present application satisfies at least one of the following conditions, the slope change characteristic of the SOC-OCV curve of the positive electrode active material is more significant, facilitating the control of the battery management system BMS.

In some embodiments, the positive electrode active material includes a layered oxide. Optionally, the layered oxide includes one or more of a compound with a molecular formula of NaₓM_{y}O₂, and modified compounds thereof, where 0 < x ≤ 2.1, 0 < y ≤ 2.1, and M is selected from one or more of Ti, V, Cr, Fe, Co, Mn, Ni, Cu, Zn, Sr, Y, Zr, Nb, Mo, Cd, Sn, Sb, Te, Ba, Ta, W, Yb, La, and Ce; and further optionally, M is selected from one or more of Ti, V, Cr, Fe, Co, Mn, Ni, Cu, and Zn.

Exemplarily, the layered oxide includes one or more of NaFeO₂, NaTiO₂, NaMnO₂, Na₂NiO₂, Na_{2/3}[Ni_{1/3}Mn_{2/3}]O₂, Na_{2/3}[Ni_{1/3}Mn_{1/3}Fe_{1/3}]O₂, Na_{2/3}[Cu_{1/3}Mn_{2/3}]O₂, Na_{2/3}[Fe_{1/2}Mn_{1/2}]O₂, Na_{2/3}[Co_{2/3}Mn_{1/3}]O₂, and Na_{7/9}[Cu_{2/9}Fe_{1/9}Mn_{2/3}]O₂.

In some embodiments, the positive electrode active material further includes a sodium-containing polyanionic compound, and modified compounds thereof, where the polyanionic compound includes various types, such as phosphate, pyrophosphate, a mixed polyanionic compound, sulfate, and the like.

In some embodiments, in addition to sodium ions, the cations of the polyanionic compound may include cations of one or more elements from the group: Ni, V, Co, Fe, Mn, Ti, Cr, Zn, and Cu.

In some embodiments, the anions of the polyanionic compound include one or more of PO₄³⁻, P₂O₇⁴⁻, (PO₄)₂P₂O₇¹⁰⁻, (SO₄)₂⁴⁻, and (SO₄)₃⁶⁻.

In some embodiments, the anions of the polyanionic compound further include F⁻.

In some embodiments, based on a total molar amount of anions of the polyanionic compound, a molar percentage of PO₄³⁻ is denoted as Aₘₒₗ%, and a molar percentage of P₂O₇⁴⁻ is denoted as Bₘₒₗ%; the polyanionic compound satisfies: 0.1 ≤ A/B ≤ 5.0; and optionally, 0.1 ≤ A/B ≤ 3.0. Specifically, the polyanionic compound may include a mixture of phosphate and pyrophosphate, or the polyanionic compound may include mixed polyanions. Exemplarily, A/B may be 0.1, 0.5, 1.0, 1.5, 2.0, 2.5, 3.0, or a value within a range defined by any two of these values.

Exemplarily, the phosphate includes one or more of NaCoPO₄, NaMnPO₄, Na₃V₂(PO₄)₃, and NaCoPO₄F.

Exemplarily, the pyrophosphate includes one or more of Na₂CoP₂O₇, Na₂FeP₂O₇, and Na₂MnP₂O₇.

Exemplarily, the mixed polyanionic compounds include one or more of Na₄Co₃(PO₄)₂P₂O₇, Na₄Fe₃(PO₄)₂P₂O₇, and Na₄Mn₃(PO₄)₂P₂O₇.

Exemplarily, the sulfate includes at least one of Na₂Fe(SO₄)₂ and Na₂Fe₂(SO₄)₃.

In some embodiments, the positive electrode active material may include a layered oxide and a polyanionic compound, and based on a mass of the positive electrode active material, a mass percentage of the layered oxide is denoted as Cwt%, where 0 < C ≤ 70. Exemplarily, the mass percentage Cwt% of the layered oxide may be 1wt%, 2wt%, 5wt%, 10wt%, 15wt%, 20wt%, 25wt%, 30wt%, 35wt%, 40wt%, 45wt%, 50wt%, 60wt%, 70wt%, or a value within a range defined by any two of these values.

On the basis that the positive electrode active material satisfies the above conditions, the modified compounds of the embodiments of the present application include surface-coated modified compounds and/or doped modified compounds. The surface-coated modified compounds may have a coating layer disposed on at least a portion of the surface of the material particles, the coating layer may include at least one of a carbon layer, an oxide layer, an inorganic salt layer, and a conductive polymer layer, and surface coating modification can improve the cycle performance of the sodium-ion battery. The doped modified compounds may have at least one of elements such as Li, Zn, and Cu added to the material, and doping modification can improve the structural stability of the sodium-ion battery.

In some embodiments, the positive electrode film layer may further optionally include a positive electrode conductive agent. The positive electrode conductive agent is not limited to a particular type in the embodiments of the present application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, based on a mass of the positive electrode film layer, a mass percentage of the positive electrode conductive agent is less than or equal to 5wt%.

In some embodiments, the positive electrode film layer may further optionally include a positive electrode binder. The positive electrode binder is not limited to a particular type in the embodiments of the present application. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on the mass of the positive electrode film layer, a mass percentage of the positive electrode binder is less than or equal to 5wt%.

In some embodiments, the positive electrode current collector may be a metal foil current collector or a composite current collector. As an example, an aluminum foil may be used as the metal foil. The composite current collector may include a polymer material matrix and a metal material layer formed on at least one surface of the polymer material matrix. As an example, the metal material may include at least one of aluminum, aluminum alloy, nickel, nickel alloy, titanium, titanium alloy, silver, and silver alloy. As an example, the polymer material matrix may include at least one of polypropylene (PP), polyethylene terephthalate (PET), polybutylene terephthalate (PBT), polystyrene (PS), and polyethylene (PE).

The positive electrode film layer is generally formed by applying a positive electrode slurry onto the positive electrode current collector, followed by drying and cold pressing. The positive electrode slurry is generally formed by dispersing the positive electrode active material, an optional conductive agent, an optional binder, and optional other additives in a solvent and stirring to uniformity.

### [Negative electrode plate]

In some embodiments, the negative electrode plate includes a negative electrode current collector. During the charging process, sodium ions gain electrons on the surface of the negative electrode current collector to form a sodium metal layer.

In some embodiments, the negative electrode current collector may be a metal foil current collector or a composite current collector. As an example, an aluminum foil or copper foil may be used as the metal foil. The composite current collector may include a polymer material matrix and a metal material layer formed on at least one surface of the polymer material matrix. As an example, the metal material may include at least one of copper, copper alloy, nickel, nickel alloy, titanium, titanium alloy, silver, and silver alloy. As an example, the polymer material matrix may include at least one of polypropylene (PP), polyethylene terephthalate (PET), polybutylene terephthalate (PBT), polystyrene (PS), and polyethylene (PE).

Further, the negative electrode plate includes a conductive layer disposed on the negative electrode current collector, where the conductive layer includes a negative electrode conductive agent. As an example, the negative electrode conductive agent may include at least one of superconducting carbon, conductive graphite, acetylene black, carbon black, Ketjen black, carbon dots, carbon nanotubes, graphene, and carbon nanofiber.

In some other embodiments, the negative electrode plate includes a negative electrode current collector and a sodium metal sheet disposed on at least one surface of the negative electrode current collector. For example, the negative electrode current collector has two opposite surfaces in its thickness direction, and the sodium metal sheet is disposed on either or both of the two opposite surfaces of the negative electrode current collector.

The material of the negative electrode current collector is as described above. Details are not described herein again.

In some embodiments, the negative electrode film layer may further optionally include a negative electrode conductive agent. The negative electrode conductive agent is not limited to a particular type in the embodiments of the present application. As an example, the negative electrode conductive agent may include at least one of superconducting carbon, conductive graphite, acetylene black, carbon black, Ketjen black, carbon dots, carbon nanotubes, graphene, and carbon nanofiber. In some embodiments, based on a total weight of the negative electrode film layer, a mass percentage of the negative electrode conductive agent is less than or equal to 5wt%.

In some embodiments, the negative electrode film layer may further optionally include a negative electrode binder. The negative electrode binder is not limited to a particular type in the embodiments of the present application. As an example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), and carboxymethyl chitosan (CMCS). In some embodiments, based on the total weight of the negative electrode film layer, a mass percentage of the negative electrode binder is less than or equal to 5wt%.

In some embodiments, the negative electrode film layer may further optionally include other additives. As an example, the other additives may include a thickener, for example, sodium carboxymethyl cellulose (CMC) or a PTC thermistor material. In some embodiments, based on the total weight of the negative electrode film layer, a mass percentage of the other additives is less than or equal to 2wt%.

The negative electrode film layer is typically formed by applying a negative electrode slurry onto the negative electrode current collector, followed by drying and cold pressing. The negative electrode slurry is typically formed by dispersing the negative electrode active material, the optional conductive agent, the optional binder, and the optional other additives in a solvent and stirring them to uniformity. The solvent may be but is not limited to N-methylpyrrolidone (NMP) or deionized water.

### [Electrolyte]

During the charging and discharging process of a battery cell, sodium ions intercalate and deintercalate back and forth between the positive electrode plate and the negative electrode plate, and the electrolyte conducts the active ions between the positive electrode plate and the negative electrode plate. The electrolyte is not limited to a particular type in the present application, and can be selected based on actual needs.

The electrolyte includes an electrolytic salt and a solvent. The electrolytic salt and the solvent are not specifically limited to any types, and can be selected based on actual needs.

As an example, the electrolytic salt may include, but is not limited to, at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethane)sulfonimide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluoro(oxalatophosphate) (NaDFOP), and sodium tetrafluoro(oxalatophosphate) (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolyte may further optionally include an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature power performance of the battery.

### [Separator]

In some embodiments, the battery cell further includes a separator. The separator is not limited to a particular type in the present application, and may be any well-known porous separator with good chemical stability and mechanical stability.

In some embodiments, the material of the separator may include at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the positive electrode plate, negative electrode plate, and separator may be made into an electrode assembly through winding or lamination.

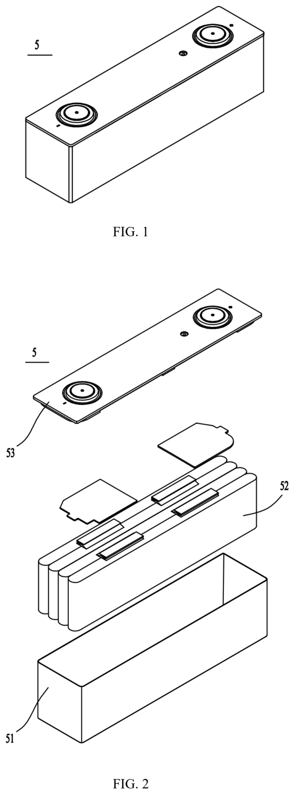

Shape of the battery cell is not particularly limited in the present application, and the battery cell may be cylindrical, rectangular, or of any other shapes. FIG. 1 shows a rectangular battery cell 5 as an example.

In some embodiments, as shown in FIG. 1 and FIG. 2, an outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the battery cell 5, and the quantity may be adjusted as required.

The preparation method of the battery cell in the embodiments of the present application is well-known. In some embodiments, the positive electrode plate, the separator, the negative electrode plate, and the electrolyte may be assembled to form a battery cell. As an example, the positive electrode plate, the separator, and the negative electrode plate may be formed into an electrode assembly through winding or lamination; and the electrode assembly is placed into the outer package, followed by drying, and the electrolyte is injected, followed by processes such as vacuum packaging, standing, formation, and shaping, to obtain a battery cell.

In some embodiments of the present application, the battery cells according to the present application may be assembled into a battery module, and the battery module may include multiple battery cells. A specific quantity may be adjusted based on application and capacity of the battery module.

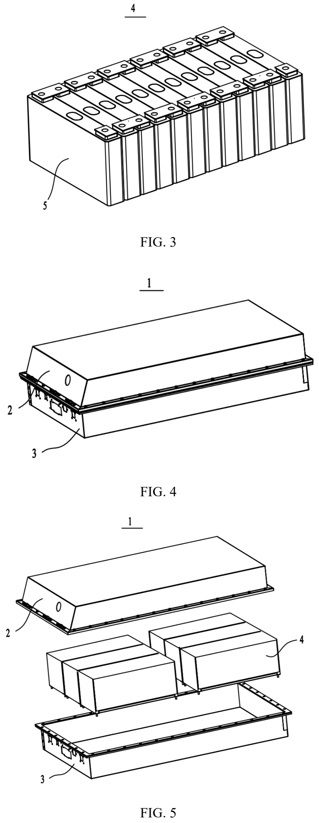

FIG. 3 is a schematic diagram of a battery module 4 as an example. As shown in FIG. 3, in the battery module 4, multiple battery cells 5 may be sequentially arranged in a length direction of the battery module 4. Certainly, the battery cells may alternatively be arranged in any other manner. Further, the plurality of battery cells 5 may be fastened through fasteners.

Optionally, the battery module 4 may further include a shell with an accommodating space, and the plurality of battery cells 5 are accommodated in the accommodating space.

In some embodiments, the battery module may be further assembled into a battery pack, and a quantity of battery modules included in the battery pack may be adjusted based on application and capacity of the battery pack.

FIG. 4 and FIG. 5 are schematic diagrams of a battery pack 1 as an example. As shown in FIG. 4 and FIG. 5, the battery pack 1 may include a battery box and multiple battery modules 4 arranged in the battery box. The battery box includes an upper box body 2 and a lower box body 3. The upper box body 2 is configured to cover the lower box body 3 to form an enclosed space for accommodating the battery modules 4. The multiple battery modules 4 may be arranged in the battery box in any manner.

The battery of the embodiments of the present application may also include one or more battery cells, and in the case where the battery includes multiple battery cells, the battery may include a battery module or a battery pack.

### Electric apparatus

The embodiments of the present application also provide an electric apparatus, where the electric apparatus includes at least one of the battery cell, battery module, and battery pack of the present application. The battery cell, battery module, and battery pack may be used as a power source or an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The battery cell, battery module, or battery pack may be selected for the electric apparatus depending on requirements for using the electric apparatus.

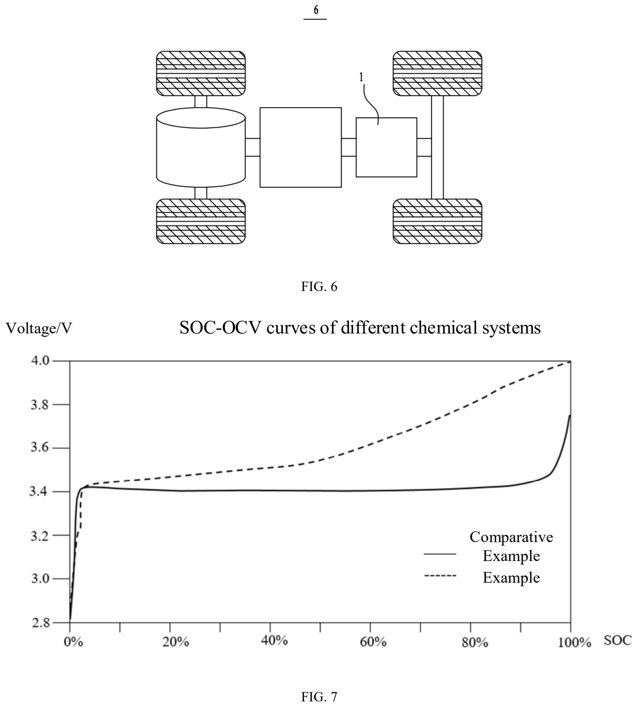

FIG. 6 is a schematic diagram of an electric apparatus as an example. The electric apparatus 6 is a battery electric vehicle, a hybrid electric vehicle, a plug-in hybrid electric vehicle, or the like. To satisfy requirements of the electric apparatus for high power and high energy density, a battery pack 1 or a battery module may be used. As another example, the electric apparatus may be a mobile phone, a tablet computer, a notebook computer, or the like. Such electric apparatus is generally required to be light and thin and may use a battery cell as its power source.

### Examples

The following describes examples of the present application. The examples described below are illustrative and merely used for explaining the present application, and cannot be construed as limitations on the present application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### 1. Preparation of positive electrode plate:

A 12 µm thick aluminum foil was used as a positive electrode current collector.

A positive electrode active material (50wt% layered oxide, Na_{2/3}[Ni_{1/3}Mn_{1/3}Fe_{1/3}]O₂, and 50wt% polyanionic compound Na₃V₂(PO₄)₃), a conductive agent Super P, and a binder polyvinylidene fluoride were mixed at a mass ratio of 96:2:2 in N-methylpyrrolidone (NMP) to form a positive electrode slurry. The positive electrode slurry was applied onto a current collector aluminum foil, and the product was dried at 85°C and cold-pressed, followed by trimming, cutting, slitting, and drying under a vacuum condition at 85°C for 4 h, to prepare a positive electrode plate.

### 2. Preparation of negative electrode plate:

An 8 µm thick copper foil was used as a negative electrode current collector.

### 3. Preparation of electrolyte:

In an environment with a water content of less than 10 ppm, non-aqueous organic solvents diglyme and triethylene glycol dimethyl ether were mixed in a volume ratio of 1:1 to obtain an electrolyte solvent, and then an electrolyte sodium salt sodium hexafluorophosphate was mixed with the mixed solvent to prepare an electrolyte with a sodium salt concentration of 1 mol/L.

### 4. Preparation of sodium-ion battery:

A polyethylene film (PE) with a thickness of 16 µm was used as a separator. The positive electrode plate, the separator, and the negative electrode plate were sequentially stacked, so that the separator was located between the positive electrode plate and negative electrode plate for isolation. The resulting stack was wound to obtain an electrode assembly. The electrode assembly was placed in an outer package. The product was dried and then injected with the electrolyte, and followed by processes such as vacuum packaging, standing, formation, and shaping to obtain a sodium-ion battery (a pouch sodium-ion battery with a thickness of 4.0 mm, width of 60 mm, and length of 140 mm).

### Comparative Example 1

A sodium-ion battery was prepared using a method similar to Example 1, with the difference being that the positive electrode active material in Comparative Example 1 was Na₃V₂(PO₄)₃.

### Parameters of examples and comparative examples are shown in Table 1.

### Test method

### 1. Testing of element content in positive electrode plate:

The content of carbon element/metal/other non-metal elements was obtained using Agilent ICP-OES730 to perform inductively coupled plasma optical emission spectroscopy (ICP), and then the ICP results were used to calculate the content of carbon element/metal/other non-metal elements.

### 2. SOC-OCV curve:

S101: The sodium-ion batteries prepared in the examples and comparative example were charged with a nominal current using constant current and constant voltage until a nominal upper cut-off voltage of the sodium-ion battery was reached, such that the sodium-ion batteries were fully charged.

S102: The fully charged sodium-ion battery was left standing for 2 h to allow the electrolyte in the sodium-ion battery to fully infiltrate the separator and the active material, such that the voltage of the sodium-ion battery was stabilized.

S103: The battery was discharged at a discharge rate of 0.33C to a lower cut-off voltage of the sodium-ion battery, and an actual discharged capacity C₀ of the sodium-ion battery was obtained through testing, where the actual discharged capacity C₀ was an actual capacity of the sodium-ion battery.

S104: The sodium-ion battery after being discharged was left standing for 2 h to allow the electrolyte in the sodium-ion battery to fully infiltrate the separator and the active material, such that the voltage of the sodium-ion battery was stabilized.

S105: The sodium-ion battery was charged with a constant current of 0.04C₀ to obtain a capacity C₁.

S106: C was used as the denominator, and a capacity-open circuit voltage curve was converted into a state of charge SOC-open circuit voltage OCV curve.

### Test results

The test results are shown in Table 1.

**Table 1**

| Item | SOC-OCV curve | |
|---|---|---|
| | Accumulated SOC | Slope k (mV/1% SOC) |
| Comparative Example 1 | 15% | 5 |
| Example 1 | 35% | 8 |

It can be seen from FIG. 7 that, FIG. 7 is an open circuit voltage OCV-state of charge SOC curve for Comparative Example 1 and Example 1. From this curve and Table 1, it can be seen that compared to Comparative Example 1, the OCV-SOC curve of the positive electrode active material in Example 1 exhibits a significant slope change, thereby facilitating the control of a battery management system BMS.

The positive electrode active material of the embodiments of the present application, when satisfying 90% ≤ SOC ≤ 100% and k ≥ 5 mV/1% SOC, and/or 25% ≤ SOC ≤ 50% and k ≥ 5 mV/1% SOC, is more conducive to precise control of the battery management system BMS.

In the embodiments of the present application, the type of positive electrode active material is adjusted. For example, the anions of the polyanionic active material are adjusted to PO₄³⁻ and/or (PO₄)₂P₂O₇¹⁰⁻, or the cations (non-sodium ions) of the polyanionic active material are adjusted to other cations such as Ni, V, Co, or the like, so that the overall OCV-SOC curve of the positive electrode active material exhibits a significant slope change, facilitating the control of the battery management system BMS. In the embodiments of the present application, the type of layered oxide may also be adjusted. For example, the cations of the layered oxide are adjusted to Ti, V, Cr, Co, or the like, so that the overall OCV-SOC curve of the positive electrode active material exhibits a significant slope change, facilitating the control of the battery management system BMS. Certainly, the present application can also adjust the trend of the OCV-SOC curve by adjusting the molar ratio of different anions and/or the molar ratio of different cations.

The embodiments of the present application can also adjust the trend of the overall OCV-SOC curve of the positive electrode active material by adjusting the mass ratio of the layered oxide and the polyanionic compound, thereby enabling more precise control of the battery management system BMS.

Although the present application has been described with reference to the preferred embodiments, various modifications to the present application and replacements of the components therein with equivalents can be made without departing from the scope of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A sodium-ion battery, comprising a negative electrode plate and a positive electrode plate containing a positive electrode active material, wherein the negative electrode plate comprises a negative electrode current collector and a sodium metal layer disposed on at least one surface of the negative electrode current collector; and
a slope of a state of charge SOC-open circuit voltage OCV curve of the sodium-ion battery is denoted as k, wherein the state of charge SOC-open circuit voltage OCV curve of the sodium-ion battery satisfies: accumulated SOC ≥ 20%, and k ≥ 5 mV/1% SOC.

2. The sodium-ion battery according to claim 1, wherein the state of charge SOC-open circuit voltage OCV curve of the sodium-ion battery satisfies: 90% ≤ SOC ≤ 100%, and k ≥ 5 mV/1% SOC; and/or 25% ≤ SOC ≤ 50%, and k ≥ 5 mV/1% SOC.

3. The sodium-ion battery according to claim 1 or 2, wherein the positive electrode plate comprises a positive electrode active material, the positive electrode active material comprising at least one of a layered oxide and a sodium-containing polyanionic compound, and modified compounds thereof;
optionally, the layered oxide comprises one or more of a compound with a molecular formula of NaₓM_{y}O₂, and modified compounds thereof, wherein 0 < x ≤ 4.5, 0 < y ≤ 1, and M is selected from one or more of Ti, V, Cr, Fe, Co, Mn, Ni, Cu, Zn, Sr, Y, Zr, Nb, Mo, Cd, Sn, Sb, Te, Ba, Ta, W, Yb, La, and Ce; and further optionally, M is selected from one or more of Ti, V, Cr, Fe, Co, Mn, Ni, Cu, and Zn; and
optionally, anions of the polyanionic compound comprise one or more of PO₄³⁻, P₂O₇⁴⁻, (PO₄)₂P₂O₇¹⁰⁻, (SO₄)₂⁴⁻, and (SO₄)₃⁶⁻; and further optionally, the anions of the polyanionic compound further comprise F⁻.

4. The sodium-ion battery according to claim 3, wherein the layered oxide comprises one or more of NaFeO₂, NaTiO₂, NaMnO₂, Na₂NiO₂, Na_{2/3}[Ni_{1/3}Mn_{2/3}]O₂, Na_{2/3}[C_{1/3}Mn_{2/3}]O₂, Na_{2/3}[Fe_{1/2}Mn_{1/2}]O₂, Na_{2/3}[Co_{2/3}Mn_{1/3}]O₂, and Na_{7/9}[Cu_{2/9}Fe_{1/9}Mn_{2/3}]O₂.

5. The sodium-ion battery according to claim 3 or 4, wherein the polyanionic compound comprises cations of one or more elements from the group: Ni, V, Co, Fe, Mn, Ti, Cr, Zn, and Cu.

6. The sodium-ion battery according to any one of claims 3 to 5, wherein the polyanionic compound comprises one or more of NaCoPO₄, NaMnPO₄, Na₃V₂(PO₄)₃, NaCoPO₄F, Na₂CoP₂O₇, Na₂FeP₂O₇, Na₂MnP₂O₇, Na₄Co₃(PO₄)₂P₂O₇, Na₄Fe₃(PO₄)₂P₂O₇, Na₄Mn₃(PO₄)₂P₂O₇, Na₂Fe(SO₄)₂, and Na₂Fe₂(SO₄)₃-

7. The sodium-ion battery according to any one of claims 3 to 6, wherein, based on a total molar amount of anions of the polyanionic compound, a molar percentage of PO₄³⁻ is denoted as Aₘₒₗ%, and a molar percentage of P₂O₇⁴⁻ is denoted as Bₘₒₗ%; the polyanionic compound satisfies: 0.1 ≤ A/B ≤ 5.0; and optionally, 0.1 ≤ A/B ≤ 3.0.

8. The sodium-ion battery according to any one of claims 3 to 7, wherein, based on a total mass of the layered oxide and the polyanionic compound, a mass percentage of the layered oxide is denoted as Cwt%, wherein 0 < C ≤ 70.

9. A battery, comprising the sodium-ion battery according to any one of claims 1 to 8.

10. An electric apparatus, comprising the battery according to claim 9.
